# EUROPÄISCHE PATENTSCHRIFT

(11) **EP 0 925 675 B1**
(45) Veröffentlichungstag und Bekanntmachung des Hinweises auf die Patenterteilung: **20.07.2005**
(21) Anmeldenummer: 97941828.2
(22) Anmeldetag: 26.08.1997
(51) Int. Cl.: H04M 1/00, H04M 1/274

(54) **STEUERUNG VON KOMMUNIKATIONSENDGERÄTEN**
COMMUNICATION TERMINAL CONTROL
PROCEDE SERVANT A COMMANDER DES TERMINAUX DE TELECOMMUNICATIONS

(30) Priorität: 16.09.1996 DE 1963771
(43) Veröffentlichungstag der Anmeldung: 30.06.1999
(73) Patentinhaber: SIEMENS AKTIENGESELLSCHAFT, 80333 München (DE)
(72) Erfinder: SCHNEIDER-HUFSCHMIDT, Matthias, D-80997 München (DE); OBERMAIER, Anton, D-80637 München (DE)
(86) Internationale Anmeldenummer: PCT/DE1997/001855
(87) Internationale Veröffentlichungsnummer: WO 1998/012854

(56) Entgegenhaltungen:
- EP-A- 0 639 017
- DE-A- 4 425 604
- GB-A- 2 262 630
- GB-A- 2 291 563
- US-A- 4 453 040

## Beschreibung

Die Erfindung betrifft ein Verfahren gemäß dem Oberbegriff des Patentanspruchs 1.

Solche Kommunikationsendgeräte sind beispielsweise Komforttelefone mit und ohne Anrufbeantworter, die Anrufbeantworter selbst, Faxgeräte, sowie Schnurlos- oder Mobil-Telefone. Diese Kommunikationsendgeräte weisen eine ganze Reihe von Komponenten auf, die von einem Benutzer eingestellt und gesteuert werden müssen. Zu diesen Komponenten gehören beispielsweise das Endgerät selbst, eine Basisstation bei den Schnurlos-Telefonen, extern angebotene Dienste im Telekommunikationsnetz, und beispielsweise ein Anrufbeantworter, der von einem externen Telefon aus abgefragt werden soll.

Die Steuerung der Komponenten des Kommunikationsendgerätes erfolgt in der Regel über eine Wähltastatur. Durch Betätigung einer Taste der Wähltastatur werden Signale im Mehrfrequenz-Verfahren aktiviert. Über diese Signale werden Funktionen ausgelöst, die auch an einem Display dargestellt werden können. Die Anzahl der möglichen Signale ist durch die Anzahl und die Belegung der Tasten bei der verwendeten Wähltastatur vorgegeben.

Bei der Einstellung des Kommunikationsendgerätes selbst oder einer dazugehörigen Basisstation werden zum Teil Signale zum Aufruf von Funktionen verwendet, die nicht über eine Standard-Wähltastatur eingegeben werden können.

Bei Steuersignalen, die über eine Amtsleitung an externe Geräte geschickt werden, hat der Benutzer außer einer manuell einfügbaren, in ihrer Zeitdauer festgelegten Pause in der Regel keine weitere Einflußmöglichkeit.

Bei Kommnunikationsendgeräten mit einem Telefonbuch-Register oder mit programmierbaren Funktionstasten kann der Benutzer die notwendigen Steuerbefehle auf diesen Funktionstasten oder im Register ablegen. Er ist dabei auf die Zeichen beschränkt, die in den entsprechenden Registern gespeichert werden können. Außerdem hat der Benutzer nach dem Aufruf und dem Abschicken des entsprechenden Registerinhalts keinen Einfluß mehr auf die Ausführung der Steuersequenz und damit auf die Ausführung der Funktion. Bei dieser Art und Weise der Speicherung der Steuersequenz kann der Benutzer variable Rufnummern oder persönliche Identifizierungsnummern nicht während der Ausführung in die Steuersequenz bzw. in den Steuerbefehl integrieren. Für variable Rufnummern und Identifizierungsnummern müssen dann zwei Funktionstasten für die Ausführung einer Funktion belegt werden. Mit der ersten Funktionstaste wir die Steuersequenz bis zur notwendigen Eingabe einer variablen Rufnummer oder einer Identifizierungsnummer ausgeführt. Mit der zweiten Funktionstaste wird der Rest der Steuersequenz nach der Eingabe der Nummer ausgeführt.

Aus GB-A-2 262 630 ist bekannt, gespeicherte Steuerbefehl-Komponenten frei wählbar zu adressieren, so daß eine hohe Benutzerfreundlichkeit gewährleistet ist

Weiterhin ist aus GB-A-2 291 563 bekannt, Steuerbefehl-Komponenten, die verschiedenen Aufgabenbereichen zugeordnet sind, durch eine entsprechende Folge von Funktionstasten nacheinander auszuführen.

In dem Kommunikationsendgerät gemäß EP-A-0 639 017 sind bestimmte Dienste abgespeichert und jeweils einer Funktionstasten zugeordnet. Es ist aber nicht erkennbar, daß diese Funktionstasten frei programmierbar sein sollen.

Der Erfindung liegt die Aufgabe zugrunde, ein Verfahren der eingangs genannten Art anzugeben, durch das die Benutzerfreundlichkeit des Kommunikationsendgerätes gesteigert wird.

Diese Aufgabe wird erfindungsgemäß durch die im Patentanspruch 1 angegebenen Merkmale gelöst.

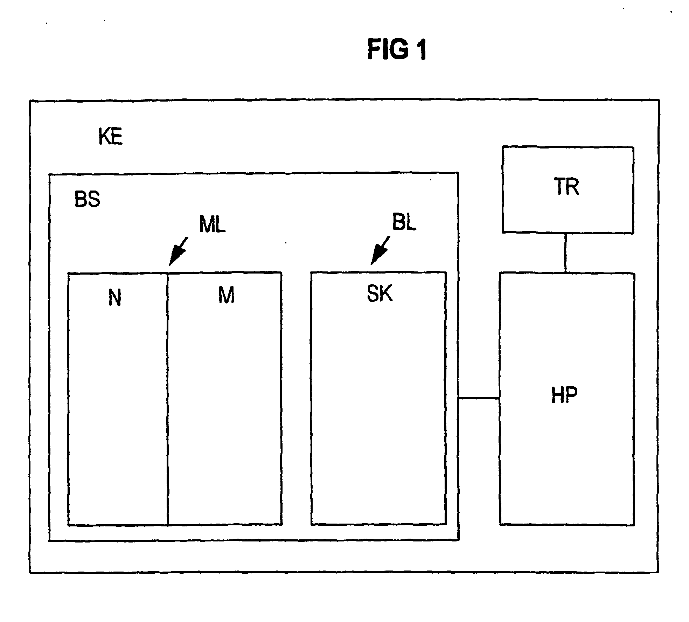

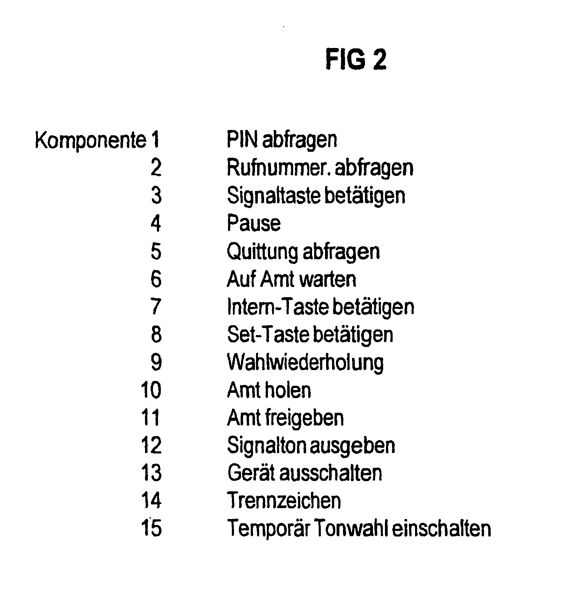

Im folgenden wird die Erfindung anhand eines in der Zeichnung dargestellten Ausführungsbeispieles beschrieben. Dabei zeigen FIG 1 ein Blockschaltbild eines Kommunikationsendgerätes, und FIG 2 einige Steuerbefehl-Komponenten.

In FIG 1 zeigt das Blockschaltbild eines Kommunikationsendgerätes KE die für das Verständnis der Erfindung wichtigen Schaltungsblöcke.

Das Kommunikationsendgerät weist einen Hauptprozessor HP auf, der zur Steuerung des Kommunikationsendgerätes KE selbst mit einem Befehlsspeicher BS verbunden ist. Das Kommunikationsendgerät KE ist in der Zeichnung als ein einziger Schaltungsblock dargestellt, es kann aber funktionsmäßig einzelne Komponenten aufweisen, wie beispielsweise eine Basisstation und ein Mobilteil. Am Hauptprozessor HP ist ein Tastaturblock TR angeschaltet, über den je nach der Ausgestaltung des Tastaturblocks TR Zahlen und/oder Buchstaben eingegeben werden können, sowie über eventuell vorhandene Funktionstasten die entsprechenden Funktionen ausgelöst werden können.

Erfindungsgemäß sind die Steuerbefehle zur Steuerung des Kommunikationsendgerätes KE zumindest teilweise in Steuerbefehl-Komponenten SK gegliedert. Diese Steuerbefehl-Komponenten SK sind in einer Befehlsliste BL im Befehlsspeicher BS abgelegt. Zur Realisierung eines herkömmlichen Steuerbefehls müssen bei der Verwendung des erfindungsgemäßen Steuerverfahrens ein oder mehrere Steuerbefehl-Komponenten SK zusammengefaßt werden. Zur Realisierung eines Steuerbefehles müssen bei der Verwendung des erfindungsgemäßen Steuerverfahrens ein oder mehrere Steuerbefehl-Komponenten SK, möglicherweise mit einem oder mehreren durch die Wähltasten oder Funktionstasten des Tastaturblockes TR erzeugten Signale, zusammengefaßt werden.

Eine Liste der möglichen Steuerbefehl-Komponenten SK ist in FIG 2 angegeben. Diese Liste kann geräteabhängig durch weitere Steuerbefehl-Komponenten SK erweitert werden, bzw. es können einzelne dieser Komponente SK nicht zur Anwendung kommen. Diese Steuerbefehl-Komponenten SK bzw. die zugehörigen Signale sind beispielsweise über die Wähltastatur und feste Funktionstasten des Tastaturblockes TR aufrufbar. Dabei können einem, über eine Taste aufrufbaren Signal, mehrere Steuerbefehl-Komponenten SK zugeordnet sein.

Der Benutzer des Kommunikationsendgerätes KE kann aus diesen Steuerbefehl-Komponenten SK sowie aus den durch die Wähltastatur oder festen Funktionstaten erzeugten Signalen eine selbstwählbare Sequenz bilden. Diese Sequenzen werden als Makros M bezeichnet, die bereits aus Software-Systemen bekannt sind. Die ausgewählten Steuerbefehl-Komponenten SK werden als Makro M zusammengefaßt. Alle vom Benutzer definierten Makros M werden in einer Makroliste ML zusammengefaßt und dort abgespeichert. Zur Wiederauffindung der individuell zusammengestellten Sequenz von Steuerbefehl-Komponenten SK wird jedem Makro M ein Name N gegeben. In der Makroliste ML sind die einander zugeordneten Namen N und Makros M abgespeichert. Durch den Aufruf eines Namens N werden die zugehörigen Steuerbefehl-Komponenten SK des Makros M aktiviert, und es werden die zugehörigen Einzelfunktionen ausgeführt.

Bei dem erfindungsgemäßen Verfahren kann der Benutzer sein Kommunikationsendgerät KE bzw. dessen Komponenten über diese Makros M steuern.

Ein Name N bzw. das zugehörige Makro M kann auch einer programmierbaren Funktionstaste zugeordnet werden. Wenn vom Benutzer diese Funktionstaste aktiviert wird, dann wird die durch das Makro M vorbestimmte Funktion ausgeführt. Wenn bei der Verarbeitung eines Makros, bzw. einer Sequenz von Steuerbefehl-Komponenten SK ein Kommando erkannt wird, so wird die entsprechende Aktion eingeleitet. Diese ist beispielsweise die Abfrage einer Zielnummer einer variablen Anrufumleitung, oder die Abfrage einer persönlichen Identifizierungsnummer, oder das Warten auf eine explizite Bestätigung des Benutzers.

## Patentansprüche

1. Verfahren zur Steuerung eines Kommunikationsendgerätes (KE), bei dem Steuerbefehle aus einem Befehlsspeicher (BS) abrufbar sind,
**dadurch gekennzeichnet, daß**
die Steuerbefehle zumindest teilweise einzeln abrufbare Steuerbefehl-Komponenten (SK) aufweisen, und
unter Namen (N) jeweils eine frei wählbare Folge von Steuerbefehl-Komponenten (SK) speicherbar ist, und für einen Abruf bereitgehalten wird.

2. Verfahren nach Anspruch 1
**dadurch gekennzeichnet, daß**
zum Abruf der Name (N) aus einer Liste (ML) von Namen ausgewählt wird.

3. Verfahren nach Anspruch 1
**dadurch gekennzeichnet, daß**
mindestens ein Name (N) einer Funktionstaste zugeordnet ist und durch diese aufgerufen wird.

## Claims

1. Method for controlling a communication terminal (KE), in which control instructions can be retrieved from an instruction storage unit (BS),
**characterised in that**
the control instructions have at least some control instruction components (SK) that can be retrieved individually and a freely selectable sequence of control instruction components (SK) can be stored under names (N) in each instance and kept available for retrieval.

2. Method according to Claim 1,
**characterised in that**
the name (N) is selected from a list (ML) of names for retrieval.

3. Method according to Claim 1,
**characterised in that**
at least one name (N) is assigned to a function key and is called up by this.

## Revendications

1. Procédé de commande d'un terminal de communication (KE), dans lequel des instructions de commande peuvent être appelées à partir d'une mémoire d'instructions (BS),
**caractérisé en ce que**
les instructions de commande présentent, du moins en partie, des composantes d'instruction de commande (SK) appelables individuellement et, sous le nom (N), une suite librement sélectionnable de composantes d'instruction de commande (SK) peut être respectivement enregistrée et est tenue disponible en vue d'un appel.

2. Procédé selon la revendication 1,
**caractérisé en ce que**,
pour être appelé, le nom (N) est sélectionné dans une liste (ML) de noms.

3. Procédé selon la revendication 1,
**caractérisé en ce**
**qu'**au moins un nom (N) est affecté à une touche de fonction et est appelé par celle-ci.
